# EUROPÄISCHE PATENTSCHRIFT

(11) **EP 1 342 024 B1**
(45) Veröffentlichungstag und Bekanntmachung des Hinweises auf die Patenterteilung: **05.07.2006**
(21) Anmeldenummer: 01270718.8
(22) Anmeldetag: 30.11.2001
(51) Int. Cl.: F16J 13/00, F16J 15/06

(54) **DICHTVORRICHTUNG**
SEALING DEVICE
DISPOSITIF D'ETANCHEIFICATION

(30) Priorität: 12.12.2000 DE 10061885
(43) Veröffentlichungstag der Anmeldung: 10.09.2003
(73) Patentinhaber: TESTO GmbH & Co., 79849 Lenzkirch (DE)
(72) Erfinder: DERR, Andreas, 79793 Wutöschingen (DE)
(74) Vertreter: Patentanwälte Westphal, Mussgnug & Partner
(86) Internationale Anmeldenummer: PCT/EP2001/014032
(87) Internationale Veröffentlichungsnummer: WO 2002/048583

(56) Entgegenhaltungen:
- DD-A- 56 676
- DE-A- 4 343 585
- DE-U- 1 773 961
- DE-U- 1 904 828
- DE-U- 1 985 888
- DE-U- 29 820 484
- GB-A- 775 168
- GB-A- 1 528 911
- GB-A- 2 170 281
- GB-A- 2 217 794
- US-A- 2 757 820
- US-A- 3 620 556

## Beschreibung

Die Erfindung betrifft eine Dichtvorrichtung gemäß dem Oberbegriff des Patentanspruchs 1, dass heißt eine Dichtvorrichtung zur Abdichtung eines Gehäuses mit einem mindestens eine Nut aufweisenden, ersten Gehäuseteil und mit einem mindestens einen Steg aufweisenden, zweiten Gehäuseteil, wobei der Steg und die Nut im geschlossenen Zustand des Gehäuses unter Bildung eines Dichtspaltes ineinander eingreifen. Eine derartige Dichtung ist aus der US-A-1528911 bekannt.

Bei Dichtvorrichtungen unterscheidet man grundsätzlich sogenannte Radialdichtungen und sogenannte Flächendichtungen. Diese bekannten Dichtvorrichtungen werden nachfolgend kurz beschrieben.

Bei Radialdichtungen entsteht die Dichtwirkung durch das Komprimieren bzw. Verpressen eines elastischen O-Ringes, der beispielsweise an einem Deckel in einer entsprechenden Nut angebracht ist und in eine Innenfläche eines Gehäuseunterteils nach dem Aufsetzen des Deckels ergreift. Durch die Rückstellkraft des O-Ringes auf die anliegende Gehäuseinnenfläche entsteht eine Dichtkraft, die das Eindringen äußerer Medien, wie zum Beispiel Wasser, Feuchtigkeit, Staub, bakterieller Verunreinigung und dergleichen, in das Gehäuseinnere mehr oder weniger gut verhindert.

Da die radial wirkenden Dichtkräfte in der Regel senkrecht zur Fügerichtung, d.h. zur Schließrichtung des Deckels, stehen, entsteht bei ruhender Dichtung kein Kraftvektor entgegen der Fügerichtung, wodurch auch kein Öffnungsbestreben und damit keine Öffnungskraft des Deckel gegenüber dem Gehäuseteil vorhanden ist.

Die auf das Gehäuseunterteil bzw. auf den Deckel oder das Gehäuseoberteil wirkenden Dichtkräfte sind gleichmäßig über den Gehäuseumfang verteilt und betragsmäßig nahezu gleich groß. Diese relativ großen Dichtkräfte müssen jedoch von dem Gehäuse abgefangen werden, wobei daraus resultierende Spannungen im Gehäuse, d. h. sowohl im Gehäuseoberteil als auch im Dekkel, nicht zu einer Verformung des Gehäuses und somit zu einer Reduzierung der Dichtwirkung führen dürfen.

Besonders kritisch wirken sich diese Spannungen aber bei relativ dünnwandigen, weitgehend geradwandigen Gehäusewandungen und bei großen Gehäusedurchmessern aus. Hier kann die Gehäusewandung an einzelnen Stellen geringfügig nachgeben, wodurch die Dichtvorrichtung ihre abdichtende Wirkung verliert und das Gehäuse undicht wird.

Bei solchen Gehäusen, an die hohe Anforderungen an die Dichtigkeit gelegt werden, wie z. B. bei Handmeßgeräten, werden zum größten Teil Dichtungsschnüre oder O-Ringe mit kleinem Querschnitt als Dichtmaterial verwendet. Des weiteren darf die Höhe der Verpressung und somit die resultierende Dichtkraft der Gehäusewandungen, die häufig aus Kunststoff bestehen, aus Stabilitätsgründen nicht besonders groß sein. Daraus folgt, dass die erwünschten Dichtkräfte bei Kunststoff lediglich durch Verpresswege in der Größenordnung von 0,1 bis 0,2 mm realisierbar sind. Dies setzt jedoch voraus, das die Fertigungstoleranzen der Gehäuseteile, insbesondere im Bereich der Dichtvorrichtung, sehr gering gehalten werden und den Betrag der Verpressung bzw. des Verpressungsweges nicht überschreiten. Verfahrensbedingt ist dies bei einigen Gehäuseteilen nicht immer möglich und zum Teil sogar ausgeschlossen.

Ein weiteres Problem bei Radialdichtungen ergibt sich durch Reibungskräfte. Da die Fügerichtung und die Richtung der Dichtkraft um 90° zueinander versetzt sind, entsteht beim Fügen bzw. Einschieben eine Reibungskraft, die der Fügekraft entgegenwirkt und die somit das Fügen erschwert. Ferner ist durch die Elastizität und das Rollen einer Dichtschnur ein vollständiges Verschließen der Gehäuse bis auf die Endlage nicht immer möglich, so dass unerwünschterweise Schmutzfugen entstehen. Ferner kann eine resultierende Kraft entsteht, die entgegen der Fügerichtung und in Öffnungsrichtung des Deckels wirkt.

Hinzu kommt, dass für die Montage des O-Ringes bzw. der Dichtschnur diese vorzugsweise in einer eigens dafür vorgesehenen Nut in einem Gehäuseteil eingelegt werden müssen. Dies ist aber nur möglich, wenn das Oberteil Konturen aufweist, auf die der O-Ring gespannt oder in die er eingelegt werden kann. Beinhaltet zudem das Gehäuseteil neben diesen Konturen weitere Einbuchtungen, dann liegt der O-Ring nicht immer korrekt an, wodurch die ordnungegemäße Funktion der Dichtvorrichtung nicht mehr gewährleistet ist.

Aus all den genannten Gründen sind Radialdichtungen trotz ihrer guten Dichtwirkung und dem Nichtvorhandensein einer Öffnungskraft für einen Großteil von Gehäusen, z.B. für Meßgeräte aus Kunststoff, nicht oder nur bedingt geeignet.

Auch bei Flächendichtungen, die ringfömig oder rechteckförmig ausgebildet sein können, entsteht die Dichtwirkung durch das Komprimieren bzw. Verpressen eines elastischen Ringes, der allerdings bei einer Flächendichtung zwischen dem Gehäuseoberteil und dem Gehäuseunterteil an deren stirnseitigen Berührungsflächen in entsprechenden Nuten aufgenommen wird. Bei Flächendichtung haben die Dichtkräfte die gleiche Richtung wie die Fügerichtung, so dass für die Öffnungskraft betragsmäßig die gleiche Kraft wie für die Dichtkraft aufgewendet werden muss. Aus diesem Grund werden das Gehäuseoberteil und das Gehäuseunterteil typischerweise mechanisch miteinander verbunden, z. B. mittels Schrauben, Schnapphaken, usw.

Auch hier werden die Dichtkräfte durch Komprimieren des elastischen Materials des Dichtringes erzeugt. Diese Kräfte sind somit verhältnismäßig groß. Die Dichtkräfte werden ebenfalls durch die Steifigkeit des Gehäuses abgefangen, wobei eine Verformung der Gehäuseteile auch hier eine Reduzierung der Dichtwirkung zur Folge hat.

Besonders bei Kunststoffgehäusen ist die Steifigkeit häufig nicht ausreichend. Die Steifigkeit wird hier häufig durch eine sehr hohe Anzahl von Verschraubungspunkten bzw. Schnapphaken erreicht, was jedoch die Herstellungskosten stark erhöht. Hinzu kommt, dass insbesondere bei kleinen Gehäusen aus Platzgründen oftmals eine höhere Anzahl von Verschraubungspunkten bzw. Schnapphaken nicht möglich ist.

Da die Dichtkräfte und die Fügekräfte den gleichen Betrag und die gleiche Richtung aufweisen, bedarf es beim Fügen häufig spezieller Montagevorrichtungen, wie z.B. Pressen, Schrauben, Klemmen. Allerdings sind diese Montagevorrichtungen für den Benutzer unbequem, da ein schnelles Öffnen und Schliesen vielfach nicht möglich ist. Darüber hinaus sind sie für häufige Öffnungs- und Schließvorgänge ungeeignet.

Des Weiteren entstehen bei dieser Dichtungsart die gleichen Probleme bezüglich der Herstellungstoleranzen wie bei den Radialdichtungen.

Die Verwendung von Dichtschnüren als Flächendichtungen sind zwar auch für komplizierte Dichtungsverläufe geeignet, da sie lediglich in eine vorgegebene Dichtnut eingelegt werden müssen. Nachteilig ist jedoch, dass bei der Montage aufgrund fehlender Spannung der Dichtschnur diese aus der Nut herausfallen bzw. sich daraus abzuheben kann.

Bekannte Flächendichtungen sind daher trotz der Unabhängigkeit des Dichtungsverlaufes aufgrund fehlender Steifigkeit der Gehäuseteile als Dichtung für diese ungeeignet und führen zudem auch noch teilweise zu Undichtigkeiten.

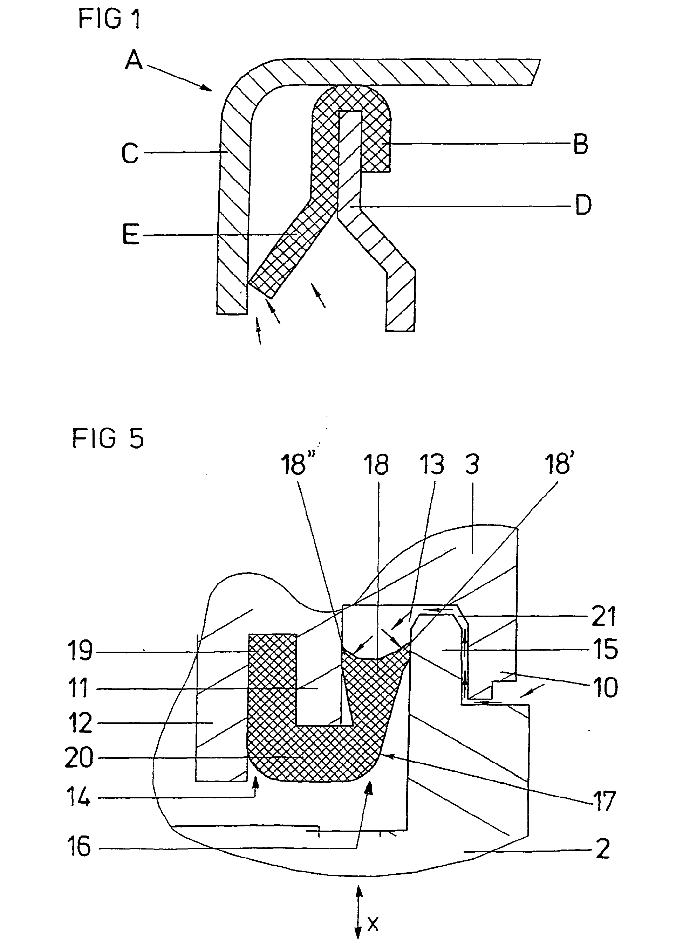

Eine Dichtvorrichtung der eingangs genannten Art ist beispielsweise in dem deutschen Gebrauchsmuster Nr. 1 773 961 beschrieben. Figur 1 zeigt eine in dem Gebrauchsmuster Nr. 1 773 961 beschriebene Dichtvorrichtung.

Bei der dort beschriebenen Dichtvorrichtung A wird das Dichtelement B beim Zusammenfügen der beiden Gehäuseteile C, D nicht komprimiert, sondern lediglich umgebogen. Um eine gute Dichtwirkung zu erzielen ist dort daher eine hohe Genauigkeit der Außenkonturen der beiden Gehäuseteile C, D sowie des Dichtelementes B zwingende Vorraussetzung. Insbesondere bei größeren Gehäusen ist es bei der dortigen Dichtvorrichtung zunehmend schwieriger, die Genauigkeit durchgehend aufrecht zu halten. Darüber hinaus müssen die Gehäuseteile C, D möglichst formstabil ausgebildet sein sollten, dass heißt zwischen Gehäuseoberteil C und Gehäuseunterteil D sollte eine hohe Steifigkeit vorliegen. Da jedoch bei Gehäuseteilen aus Kunststoff die Steifigkeit typischerweise mit der Zeit nachlässt, ist diese Dichtvorrichtung für Gehäuse aus Kunststoff nur bedingt geeignet. Insbesondere auch bei Teileverzug eines Gehäuseteiles ist hier das Risiko von Undichtigkeiten besonders groß.

Da ein Dichtschenkel E des Dichtelementes B lediglich durch die Elastizität des Materials gegen ein Abheben vom Gehäuseoberteil B geschützt ist, kann je nach Beanspruchung, z. B. durch Spritz- oder Strahlwasser eines Hochdruckreinigers (Pfeile), die Dichtung abheben und somit ihre Dichtwirkung verlieren.

Darüber hinaus wird in dem Gebrauchsmuster Nr. 1 773 961 ein weiches Dichtmaterial statt eines steifen Dichtmaterial verwendet. Da diese weichen Dichtmaterialien typischerweise eine geringe Dichtwirkung als steife bzw. harte Dichtmaterialien aufweisen, sind zusätzliche Maßnahmen wie Kleben erforderlich.

Der Erfindung liegt daher die Aufgabe zugrunde, eine Dichtvorrichtung der eingangs genannten Art weiterzubilden, die mit technisch einfachen Mitteln eine sehr gute Dichtwirkung gewährleistet.

Erfindungsgemäß wird diese Aufgabe durch eine Dichtvorrichtung des Anspruchs 1 gelöst. Demgemäß ist eine Dichtvorrichtung der eingangs genannten Art vorgesehen, die dadurch gekennzeichnet ist, dass mindestens ein Dichtelement vorgesehen ist, das derart geformt ist, dass es beim Einfügen des Steges in die Nut im Wesentlichen senkrecht zur Fügerichtung in den Dichtspalt einführbar und elastisch komprimierbar ist.

Die der vorliegenden Erfindung zugrunde liegende Idee besteht darin, dass im Gegensatz zu bekannten Dichtvorrichtungen der Formschluss zwischen Gehäuseoberteil und Gehäuseunterteil durch die Ausrichtung eines Gehäuseteils zum jeweils anderen erreicht wird. Die verbleibende Ungenauigkeit wird ausgeglichen durch die spezielle Ausformung des Dichtelementes. Auf diese Weise ist eine flächenhaft sehr gute Dichtung möglich.

Die Dichtkraft hat bei der erfindungsgemäßen Dichtvorrichtung einen sehr geringen Betrag, da sie zum größten Teil durch Komprimierung des Dichtelementes bzw. dessen Spitzen oder Kanten und nicht ausschließlich durch Verbiegung derselben erzeugt wird.

Des weiteren muss die Dichtkraft nicht von der Steifigkeit beider Gehäuseteile, sondern kann durch die Steifigkeit lediglich eines Gehäuseteils aufgenommen werden. Im vorliegenden Fall ist das das die Nut aufweisende Gehäuseteil. Die Dichtkraft ist dann besonders groß, wenn kleinere Bauformen verwendet werden. Die Gehäuseteile selbst sind spannungsfrei miteinander verbunden. Hinzu kommt, dass die Fügekraft aufgrund der geringen Dichtkraft und der somit geringen resultierenden Reibungskraft ebenfalls sehr gering ist. Vorteilhafterweise lassen sich die Gehäuseteile mittels der erfindungsgemäßen Dichtvorrichtungen sehr leicht montieren.

Erfindungsgemäß weist das Dichtelement einen ersten Schenkel auf, der ausgehend von seiner Basis zumindest mit seiner Außenfläche nach Außen geneigt ist und im Dichtspalt an einem Steg eines Gehäuseteils derart zur Anlage bringbar ist, dass eine im Wesentlichen senkrecht zu diesem Gehäuseteil bzw. zu der jeweiligen Außenfläche des Steges verlaufende Dichtkraft erzeugbar ist. Erfindungsgemäß kann durch die Fügebewegung das freie Ende des ersten Schenkels deformiert werden. Durch diese Deformation wird das Material des Dichtelementes komprimiert und aufgrund der Rückstellkraft des typischerweise elastisch ausgebildeten Materials des Dichtelementes entsteht dann die Dichtkraft. Besonders vorteilhaft an der erfindungsgemäßen Dichtvorrichtung ist, dass die Dichtkraft und die Fügekraft im wesentlichen senkrecht aufeinander stehen, so dass ein sehr geringes Öffnungsbestreben von Gehäuseunterteil zu Gehäuseoberteil besteht.

In einer ersten Ausführungsform läuft der erste Schenkel zu seinem freien Ende hin konisch zu und bildet eine Spitze. In einer zweiten Ausführungsform ist der erste Schenkel zu seinem freien Ende hin keilförmig oder dreieckförmig ausgebildet. Dadurch kann die Dichtkraft zusätzlich signifikant verringert werden.

Vorteilhafterweise weist das Dichtelement einen Auflageteil auf, auf den eines oder beide Gehäuseteile im geschlossenen Zustand des Gehäuses dichtend anliegen. Damit ist eine zusätzliche Dichtkraft und damit eine Verbesserung der Dichtwirkung erzeugbar. Diese Dichtung verläuft im wesentlichen mit einer Kraft parallel zur Fügerichtung.

Das Gehäuseunterteil bzw. das Gehäuseoberteil müssen nicht notwendigerweise geschlossen sein, sondern können innerhalb gewisser Grenzen variieren. Die Genauigkeit zwischen den Außenkonturen von Gehäuseunterteil und Gehäuseoberteil muss nicht in engen Grenzen zueinander gleich sein. Insbesondere muss die Kontur des den Steg aufweisenden Gehäuseteils nicht auf die Kontur der Nut ausgerichtet sein. Beispielsweise kann das Gehäuseunterteil labil und das Gehäuseoberteil steif ausgebildet sein, wobei das Gehäuseoberteil das Gehäuseunterteil kalibriert und damit fixiert. Als labiles Gehäuseunterteil kann sogar ein abgelängter Schlauch verwendet werden.

In einer Ausgestalltung weist das Dichtelement zumindest einen weiteren Schenkel auf. Ein Gehäuseteil weist eine weitere Nut auf, die der Aufnahme des weiteren Schenkels dient. Besonders vorteilhaft bezüglich der Dichtwirkung und der Montage ist, wenn das Dichtelement zur Aufnahme eines Vorsprunges eines Gehäuseteils im Querschnitt im Wesentlichen U-förmig ausgebildet ist und mit seinem zweiten Schenkel passgenau in die weitere Nut dieses Gehäuseteils einlegbar ist. Auf diese Weise ist das Dichtelement sehr gut innerhalb des Gehäuses fixierbar.

Des weiteren ist es von Vorteil, wenn der erste Schenkel im belastungsfreien Zustand eine geringere Länge aufweist als der zweite Schenkel, da dadurch zur Aufnahme der umgebogenen Spitze kein zusätzlicher Raum im Gehäuseteil zur Verfügung gestellt werden muß.

Eine besonders einfache Querschnittsform, die dadurch auch sehr kostengünstig herstellbar ist, ergibt sich, wenn der zweite Schenkel und das Basisteil im Querschnitt rechteckförmig ausgebildet sind, während der erste Schenkel im Querschnitt - wie bereits erwähnt - eher dreieckförmig, keilförmig, konisch oder dergleichen ausgebildet ist.

Vorteilhafterweise kann das Dichtelement bei geschlossenem Gehäuse vollständig in dem Gehäuse eingeführt sein. Es ist aber auch möglich, das Dichtelement derart in das Gehäuse einzuführen, dass die Außenfläche des zweiten Schenkels an einer Gehäuseaußenfläche frei liegt.

Wenn die freiliegende Außenfläche des zweiten Schenkels abgerundete Kanten aufweist und das Dichtelement derart in das Gehäuse einführbar ist, dass die freiliegende Außenfläche des zweiten Schenkels über die Gehäuseaußenfläche herausragt, kann das Dichtelement zusätzlich noch als Stoßschutz für das Gehäuse verwendet werden.

Das typischerweise keilförmig ausgebildete Dichtelement, das schwimmend gelagert sein kann und auf beliebige Art und Weise in der Nut zwischen Gehäuseunterteil und Gehäuseoberteil angebracht sein kann, fixiert und dichtet die Teile gegeneinander ab.

Das Dichtmaterial kann steif oder weich sein. Das Dichtelement besteht jedoch vorteilhafterweise zumindest zum Teil aus einem elastischen Werkstoff. Typischerweise wird hier ein Kunststoff, insbesondere ein Elastomer oder einen Naturkautschuk, verwendet. Ferner ist es möglich, das Dichtelement zusätzlich mit Verstärkungselementen zu versehen, um für bestimmte Anwendungsgebiete eine geringere Elastizität zur Verfügung zu stellen.

Bei Gehäusen aus Kunststoff lässt typischerweise die Steifigkeit und damit die Spannung an der Gehäusewandung mit der Zeit nach. Im Gegensatz zu Dichtvorrichtungen nach dem Stand der Technik ist die erfindungsgemäße Dichtvorrichtung nicht davon abhängig, dass zwischen den Gehäuseteilen eine bestimmte Steifigkeit vorherrscht. Die Erfindung erlaubt somit eine breitbrandige Materialauswahl.

Weitere vorteilhafte Ausgestaltungen und Weiterbildungen der Erfindung sind den Unteransprüchen und der Beschreibung unter Bezugnahme auf die Zeichnung entnehmbar.

Die Erfindung wird nachfolgend anhand der in den Figuren der Zeichnung angegebenen Ausführungsbeispiele näher erläutert. Es zeigt dabei:
- Figur 1: einen Querschnitt einer Dichtvorrichtung nach dem Stand der Technik;
- Figur 2: eine Querschnittsdarstellung eines Gehäuses mit einer erfindungsgemäßen Dichtvorrichtung;
- Figur 3: eine vergrößerte Ansicht eines ersten Ausführungsbeispiels der in Figur 2 dargestellten Dichtvorrichtung beim Einfügen (a) und bei geschlossenem Gehäuse (b);
- Figur 4: eine vergrößerte Ansicht der in Figur 2 dargestellten Dichtvorrichtung bei verzogenem Gehäuse beim Einfügen (a) und bei geschlossenem Gehäuse (b);
- Figur 5: eine vergrößerte Ansicht der in Figur 2 dargestellten Dichtvorrichtung mit Spalt zwischen den Gehäuseteilen;
- Figur 6: ein zweites Ausführungsbeispiel der erfindungsgemäßen Dichtvorrichtung;
- Figur 7: ein drittes Ausführungsbeispiel der erfindungsgemäßen Dichtvorrichtung;
- Figur 8: schematisch die Verteilung der Dichtkräfte FD bei einem rechteckigen Gehäuse mit einer Dichtvorrichtung nach dem Stand der Technik (a) und mit einer erfindungsgemäßen Dichtvorrichtung (b).

In den nachfolgenden Figuren sind - sofern nichts anderes angegeben ist - gleiche oder funktionsgleiche Elemente und Teile mit gleichen Bezugszeichen bezeichnet worden.

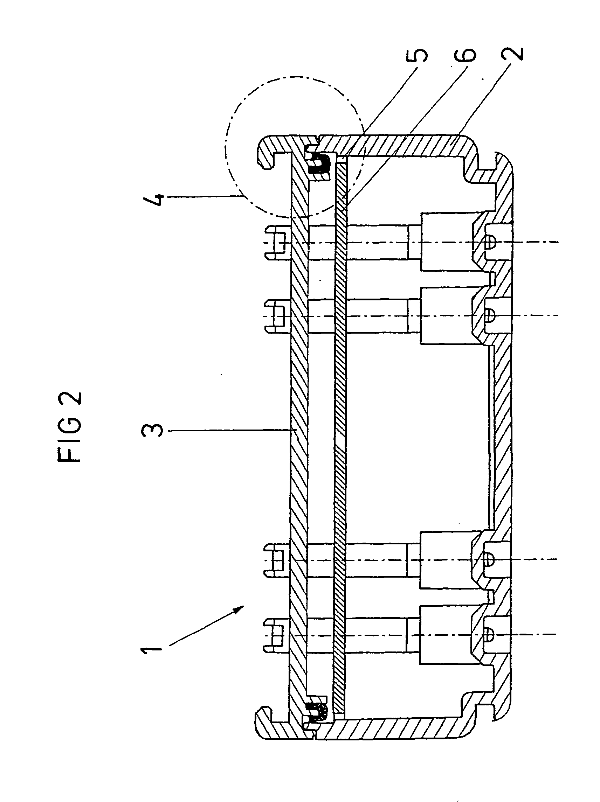

Figur 2 zeigt eine Querschnittsdarstellung eines Gehäuses mit einer erfindungsgemäßen Dichtvorrichtung.

In Figur 1 ist mit 1 ein Gehäuse, beispielsweise zur Aufnahme eines Messgerätes, bezeichnet. Das Gehäuse 1 ist zweistückig ausgebildet, das heißt es weist ein Gehäuseunterteil 2 und ein Gehäuseoberteil 3 auf. Die beiden Gehäuseteile 2, 3 sind über eine Dichtvorrichtung 4, deren Aufbau anhand der nachfolgenden Figuren noch ausführlich beschrieben wird, miteinander formschlüssig verbunden. Im vorliegenden Ausführungsbeispiel ist das Gehäuseunterteil 2 als Grundkörper ausgebildet, in dem sich ein Messgerät einbetten lässt, während das Gehäuseoberteil 3 als stoßunempfindliche Schutzabdeckung (Deckel) ausgebildet ist und dem Schutz der stoßempfindlichen Teile des Messgerätes dient. Das Gehäuseunterteil 2 weist eine Aufnahmevorrichtung 5 zur Aufnahme einer Platine 6 des Messgerätes auf.

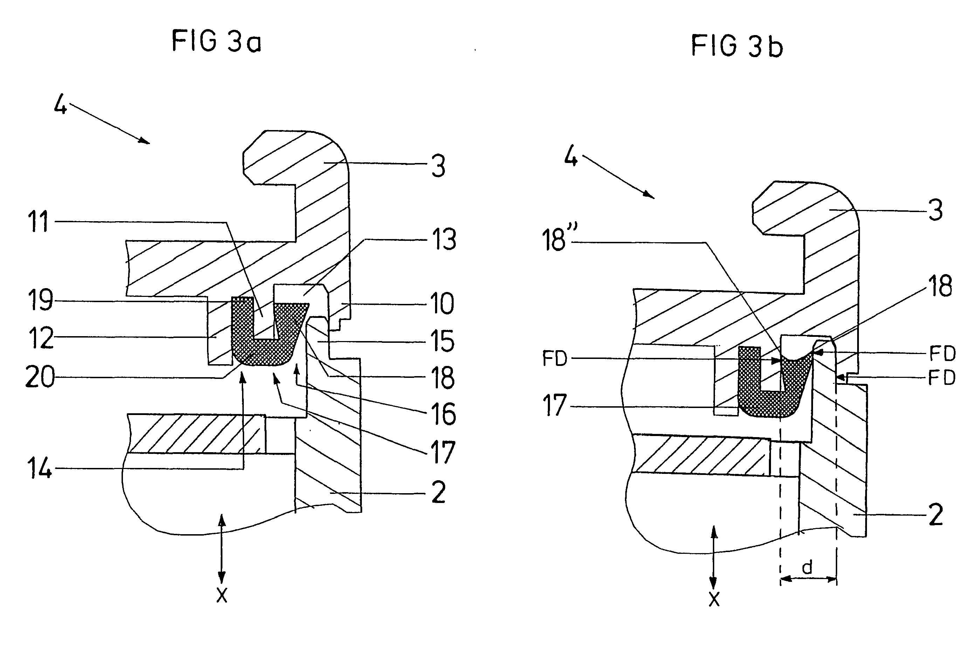

Die Figuren 3 - 5 zeigen jeweils eine vergrößerte Ansicht eines ersten Ausführungsbeispiels der in Figur 2 eingekreisten Dichtvorrichtung, wobei mit (a) die Dichtvorrichtung 4 beim Einfügen und mit (b) die Dichtvorrichtung 4 bei geschlossenem Gehäuse 1 bezeichnet ist. Dabei wurde der besseren Übersicht wegen auf eine vollständige Beschriftung jedes einzelnen Teilbildes verzichtet.

Entsprechend Figur 3 weist das Gehäuseoberteil 3 drei Vorsprünge 10, 11, 12 auf, die sich in Richtung Gehäuseunterteil 2 erstrecken. Der äußere Vorsprung 10 und der mittlere Vorsprung 11, der auch als Feder bezeichnet wird, bilden eine erste Nut 13 und der mittlere Vorsprung 11 und der innere Vorsprung 12 bilden eine zweite Nut 14. Das Gehäuseunterteil 2 weist an einer freien Seite eine Ausklinkung derart auf, dass ein mit der Gehäuseinnenseite fluchtender Steg 15, der als Dichtfeder bezeichnet wird, vorhanden ist. Der Steg 15 ist in die erste Nut 13 einführbar, wobei der Bereich zwischen der Innenfläche des Steges 15 und der Außenfläche des mittleren Vorsprunges 11 einen freien Dichtspalt 16 definiert.

Ferner zeigt Figur 3 ein im Querschnitt im wesentlichen U-förmig ausgebildetes, zumindest teilweise elastisches Dichtelement 17. Das Dichtelement 17 weist einen ersten Schenkel 18, einen zweiten Schenkel 19 und ein dazwischen angeordnetes Basisteil 20 auf.

Der erste Schenkel 18 ist im vorliegenden Ausführungsbeispiel im Querschnitt keilförmig bzw. dreieckförmig derart ausgeformt, dass er ausgehend von seinem freien Ende sich zum Ba-sisteil 20 hin verjüngt. Der zweite Schenkel 19 und die zweite Nut 14 sind an deren freien Enden dazu ausgelegt, passgenau ineinander einzugreifen. Das U-förmig augebildete Dichtelement 17 ist dabei um den mittleren Vorsprung 11 des Gehäuseteils 3 derart angelegt, dass beim Aufstecken des Steges 15 in die erste Nut 13 der erste Schenkel 18 des Dichtelementes 17 in den Dichtspalt 16 geführt wird. Bei geschlossenem Gehäuse 1 kommen die Spitzen 18', 18" des keilförmigen Schenkels 18 an den jeweiligen Flächen des mittleren Vorsprunges 11 und des Steges 15 derart zur Anlage, dass das Dichtelement 17 deformiert wird.

Aufgrund der Rückstellkraft des elastischen Materials des Dichtelementes 17 und seiner daraus resultierenden Neigung, deformiert zu werden, d. h. also zum einen sich zurückzubiegen und zum anderen komprimiert zu werden, entsteht eine Dichtkraft FD. Diese Dichtkraft FD hat einen verhältnismäßig geringen Betrag, da sie nicht ausschlieslich durch Komprimieren erzeugt wird, sondern zum großen Teil auch durch Verbiegung der Spitzen des ersten Schenkels 18.

Des Weiteren wird bei Verwendung dieses Dichtelementes 17 nahezu keine Öffnungskraft erzeugt, so dass das Gehäuseoberteil 3 nicht mit zusätzlichen mechanischen Verbindungen an dem Gehäuseunterteil 2 befestigt werden muss.

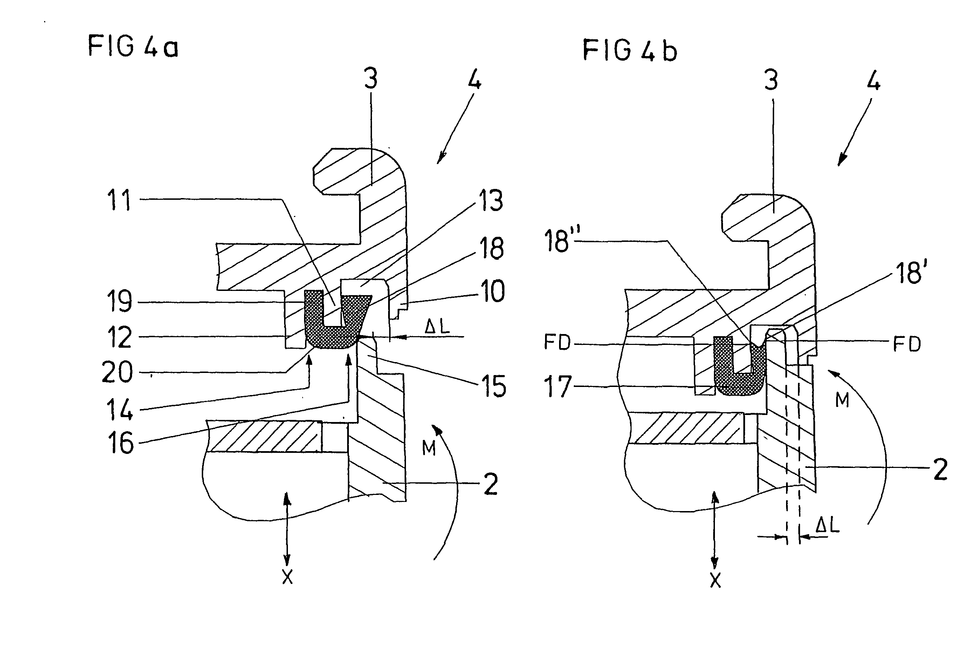

Gemäß Figur 3(b) liegt der Steg 15 bei geschlossenem Gehäuse 1 an dem äußeren Vorsprung 10 des Gehäuseoberteils 3 an. Das Gehäuse 1 in den Figuren 4(a) und (b) weist dagegen einen Teileverzug auf, dass heißt die Wandung vom Gehäuseunterteil 2 fällt nach innen. Wie sich aus der Figur 4(b) ergibt, muss der Steg 15 jedoch nicht notwendigerweise an dem inneren Vorsprung 10 anliegen, um eine gute Dichtwirkung zu erzielen. Vielmehr besitzt die Dichtvorrichtung 4 auch dann noch eine hohe Dichtwirkung, wenn der Steg 15 und der äußere Vorsprung 10 eine Toleranz Δl zueinander aufweisen. Die zulässige maximale Toleranz Δl bestimmt sich aus der Breite d der Nut 13 und der maximalen Komprimierbarkeit des Dichtelementes 17 im Bereich des ersten Schenkels 18. Es ist somit möglich, ein Gehäuse 1 mit relativ großen Toleranzen Δl im Bereich des Dichtvorrichtung 4 herzustellen, ohne dass die Dichtwirkung dabei nennenswert beeinträchtigt wird.

Dabei ist anzumerken, dass durch die Nut- und Steg-Konstruktion die Konturen von Gehäuseoberteil 3 zu Gehäuseunterteil 2 zwangsgeführt sind, wodurch ein Gehäuseverzug ausgleichbar ist. Insbesondere entsteht bei einem Teileverzug des Gehäuses ein Moment M, welches gegen die Dichtkräfte FD wirkt und welches die Dichtwirkung somit verbessert.

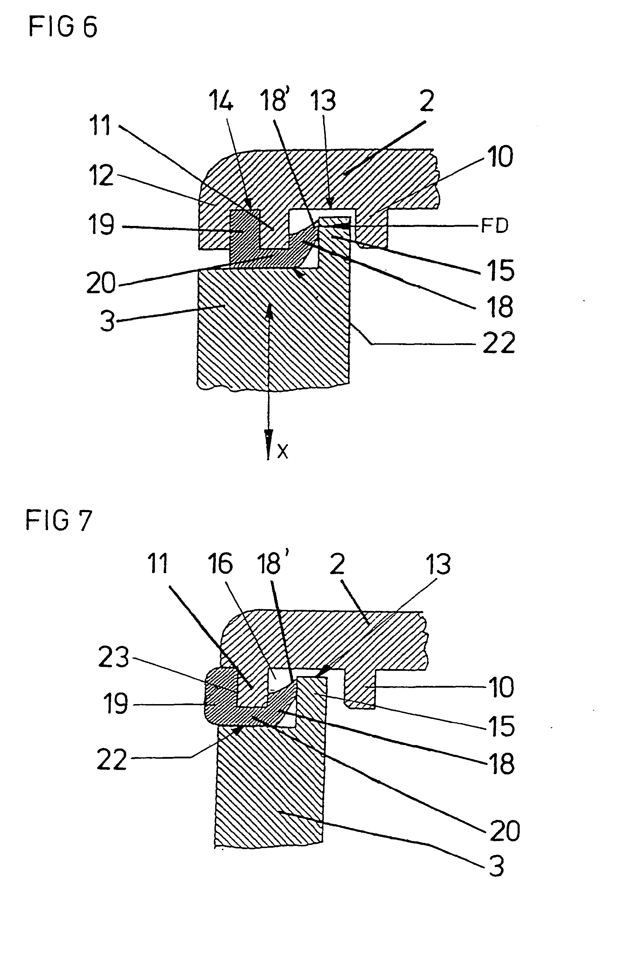

Wie bereits erwähnt, ist also die Genauigkeit der Gehäuseform bei der vorliegenden Erfindung nicht besonders relevant. Vielmehr müssen gemäß Figur 5 die Gehäuseteile 2, 3 nicht notwenigerweise in direktem Berührungskontakt zueinander stehen. Es kann vielmehr ein Spalt 21 zwischen diesen Gehäuseteilen 2, 3 vorhanden sein, über den die Oberseite des freien Schenkels 18 mit einem Druck, beispielsweise einem Wasserdruck oder einem Gasdruck (Pfeile), beaufschlagbar ist. Dadurch werden die Spitzen 18', 18'' des freien Schenkels 18 noch stärker an die jeweiligen Flächen des mittleren Vorsprungs 11 und des Steges 15 gedrückt.

Die Figuren 6 und 7 zeigen zwei weitere Ausführungsbeispiele der erfindungsgemäßen Dichtvorrichtung.

In Figur 6, wie auch in der Figur 7, sind die Vorsprünge 10 - 12, die Nuten 13, 14 und der Steg 15 nunmehr spiegelverkehrt angeordnet, dass heißt der Steg 15 und der die Nut 13 bildende Vorsprung 10 sind zur Gehäuseinnenseite gewandt, während die weitere Nut 14 und der Vorsprung 12 außen angeordnet sind. In Figur 6 ist der erste Schenkel 18 nicht keilförmig ausgebildet. Vielmehr weist hier der freie Schenkel 18 lediglich eine in Richtung der Gehäuseinnenseite gerichtete Spitze 18' auf, die beim Einfügen der beiden Gehäuseteile 2, 3 an den Steg 15 zur Anlage kommt. Die Dichtkräfte werden hier ähnlich wie in den Figuren 3 - 5 durch Umbiegen der Spitze 18' sowie durch Komprimierung des ersten Schenkels 18 erzeugt.

In Figur 6 ist ferner eine Auflagebereich 22, von dem der Steg 15 absteht, am freien Ende des Gehäuseunterteils 2 vorgesehen. Im geschlossenen Zustand kommt das Basisteil 20 des Dichtelementes 17 an diesem Auflagebereich 22 zur Anlage. Dadurch, insbesondere durch eine zusätzliche Dichtkraft parallel zur Fügerichtung, die gegen den Auflagebereich 22 wirkt, kann die Dichtwirkung zusätzlich verbessert werden

Die Dichtvorrichtung in Figur 7 weist gegenüber der in den Figuren 3 - 5 folgenden Unterschied auf: Das Gehäuseoberteil 3 weist lediglich zwei zu dem Gehäuseunterteil 2 weisende Vorsprünge 10, 11 auf. Ein äußerer Vorsprung und damit auch eine zweite Nut zur Aufnahme des zweiten Schenkels 19 ist hier nicht vorgesehen. Der zweite Schenkel 19 ist hier mit abgerundeten Außenkanten ausgeformt. Der zweite Schenkel 19 ist in eine Ausnehmung 23 des Gehäuseoberteils 3 eingesetzt und ragt aus der Außenkontur des Gehäuses 1 heraus, so dass er zusätzlich noch als Stoßschutz fungieren kann. Ansonsten entspricht die Dichtwirkung sowie die Montage des Dichtelementes 17 dem ersten Ausführungsbeispiel entsprechend Figur 3.

Obwohl bei allen Ausführungsbeispielen das U-förmige Dichtelement 17 derart angeordnet ist, dass die beiden Schenkel 18, 19 zum Gehäuseoberteil 3 weisen, ist es selbstverständlich auch möglich, dass die Anordnung der Schenkel 18, 19, wie auch der Nuten 13, 14 und des Steges 15 auch umgekehrt ausgebildet sein kann.

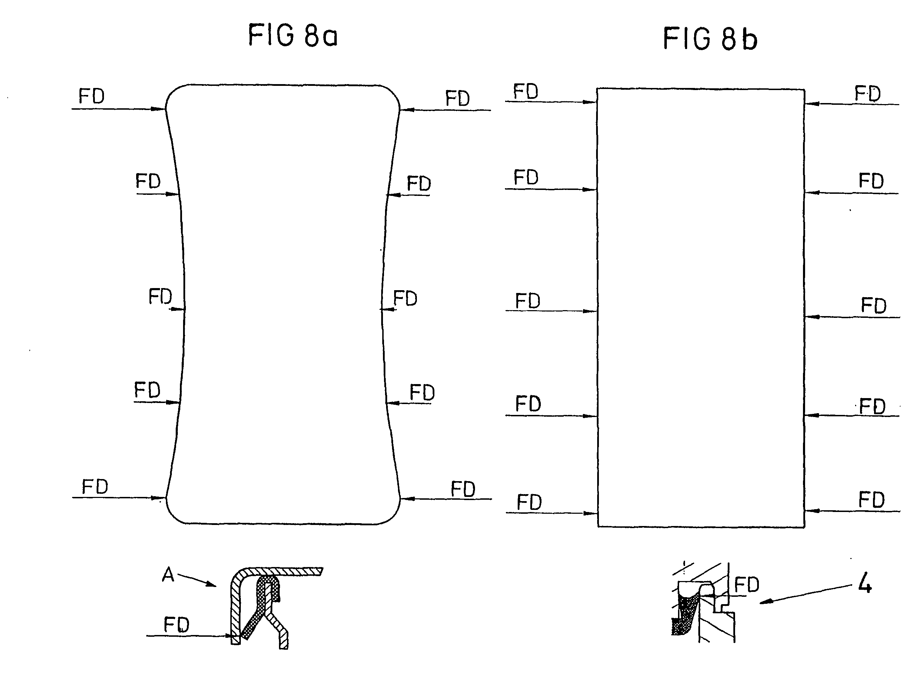

Figur 8 zeigt schematisch die Verteilung der Dichtkräfte FD an einem rechteckförmigen Gehäuse mit einer Dichtvorrichtung der eingangs genannten Art (Gebrauchsmuster Nr. 1 773 961) und einer erfindungsgemäßen Dichtvorrichtung. Bei der Dichtvorrichtung nach dem Stand der Technik werden durch Einwirkung der Dichtkräfte FD die Gehäusewände sehr stark nach innen verbogen, wobei die Dichtkraft FD in der Mitte einer Wandung bezogen auf dessen Ecken abnimmt bzw. im Extremfall gar nicht vorhanden ist. Demgegenüber ist bei einer erfindungsgemäßen Dichtvorrichtung (Figur 8(b)) der Betrag der Dichtkräfte FD an allen Gehäuseabschnitten gleich groß. Die Gehäusewandungen werden hier nicht verformt, da die Gehäuseteile von der Nut 13, dem Steg 15 und dem dazwischen angeordneten Dichtelement 17 in ordnungsgemäßer Form gehalten werden.

Die erfindungsgemäße Dichtvorrichtung weist darüber hinaus noch die folgenden Vorteile auf:
- Für alle Ausführungsbeispiele sind die Montagekräfte beim Fügen sehr gering. Auf Montagevorrichtungen bzw.
   Montagehilfen kann deshalb weitestgehend verzichtet werden.
- Des Weiteren rollt die Dichtung bzw. das Dichtelement nicht und erzeugt somit auch keine Öffnungsneigung sowie Schmutzfugen.
- Ferner wird für die Montage keine Nut entgegen der Formungsrichtung benötigt, wodurch bei Kunststoffteilen keine teuren Schieberwerkzeuge benötigt werden.
- Die Dichtung wird mit einer Flanke in eine Nut im Gehäuse gedrückt und ist somit gut fixiert und einfach montierbar.
- Es ist möglich, das Dichtelement auch für sehr komplizierte Konturen der Gehäuseteile herzustellen.
- Das Dichtelement eignet sich auch für bewegbare Teile, wie zum Beispiel Batteriedeckel.

Das Dichtelement vereint somit alle Vorteile der eingangs genannten Dichtungsarten und weist zudem durch die Möglichkeit, die Gehäuse spannungsfrei und mit großen Toleranzen herzustellen, insbesondere für Kunststoffgehäuse zusätzliche Vorteile auf.

Die Erfindung eignet sich insbesondere bei allen Gehäusen zur Aufnahme von Messgeräten. Jedoch sei die Erfindung nicht ausschließlich auf solche Gehäuse beschränkt, sondern kann im Rahmen der Erfindung auf Gehäuse zur Aufnahme beliebiger Geräte erweitert werden.

Zusammenfassend kann festgestellt werden, dass durch die Verwendung eines Dichtelementes, welches beim Fügen in eine Nut zumindest zum Teil durch Komprimieren abdichtet, auf sehr einfache, jedoch nicht desto trotz sehr effektive Weise eine jederzeit und für alle Anwendungen gut dichtende Dichtvorrichtung realisiert werden kann, ohne dass die Nachteile von bekannten, gattungsgemäßen Dichtvorrichtung in Kauf genommen werden müssen.

### Bezugszeichenliste

- 1: Gehäuse
- 2: erstes Gehäuseteil, Gehäuseunterteil
- 3: zweites Gehäuseteil, Gehäuseoberteil
- 4: Dichtvorrichtung
- 5: Aufnahmevorrichtung
- 6: Platine

- 10 - 12: Vorsprünge
- 13, 14: Nut
- 15: Steg
- 16: Dichtspalt
- 17: Dichtelement
- 18, 19: Schenkel
- 18', 18": Spitzen des Schenkels
- 20: Basisteil
- 21: Spalt
- 22: Auflagebereich
- 23: Ausnehmung

- A: Dichtvorrichtung
- B: Dichtelement
- C, D: Gehäuseteile
- E: Dichtschenkel

- d: Breite der Nut
- FD: Dichtkräfte
- Δl: Toleranz
- M: Moment
- X: Fügerichtung

## Patentansprüche

1. Dichtvorrichtung zur Abdichtung eines Gehäuses (1) mit einem mindestens eine Nut (13) aufweisenden ersten Gehäuseteil (3) und mit einem mindestens einen Steg (15) aufweisenden zweiten Gehäuseteil (2), wobei der Steg (15) und die Nut (13) im geschlossenen Zustand des Gehäuses (1) unter Bildung eines Dichtspaltes (16) ineinander eingreifen, wobei mindestens ein Dichtelement (17) vorgesehen ist, das derart geformt ist, dass es nach dem Einfügen des Steges (15) in die Nut (13) im Dichtspalt (16) angeordnet und im Wesentlichen senkrecht zur Fügerichtung elastisch komprimiert ist, wobei das Dichtelement (17) einen ersten Schenkel (18) aufweist, der im geschlossenen Zustand der beiden Gehäuseteile (2, 3) im Dichtspalt (16) angeordnet ist und der im Dichtspalt (16) mit zumindest einem Teil seiner Außenfläche an einer Außenfläche des Steges (15) derart dichtend anliegt, dass eine im Wesentlichen senkrecht zur Außenfläche des Steges (15) verlaufende Dichtkraft (FD) erzeugt ist, wobei der erste Schenkel (18) zu seinem freien Ende hin konisch eine Spitze (18') bildend zuläuft oder zu diesem freien Ende hin keilförmig oder dreieckförmig ausgebildet ist.

2. Dichtvorrichtung nach Anspruch 1,
**dadurch gekennzeichnet,**
**dass** das Dichtelement (17) ein Auflageteil (18) aufweist, an welchem das erste und/oder das zweite Gehäuseteil (2, 3) im geschlossenen Zustand des Gehäuses (1) dichtend anliegen.

3. Dichtvorrichtung nach einem der vorstehenden Ansprüche,
**dadurch gekennzeichnet,**
**dass** die Kontur des den Steg (15) aufweisenden Gehäuseteils (2) nicht auf die Kontur der Nut (14) ausgerichtet ist.

4. Dichtvorrichtung nach einem der vorstehenden Ansprüche,
**dadurch gekennzeichnet,**
**dass** das den Steg (15) aufweisende Gehäuseteil (2) als Schlauch ausgebildet ist.

5. Dichtvorrichtung nach einem der vorstehenden Ansprüche,
**dadurch gekennzeichnet,**
**dass** das Dichtelement (17) zumindest einen weiteren Schenkel (19) aufweist und dass zumindest ein Gehäuseteil (2) eine weitere Nut (14) zur Aufnahme des weiteren Schenkels (19) aufweist.

6. Dichtvorrichtung nach Anspruch 5,
**dadurch gekennzeichnet,**
**dass** das die weitere Nut (14) aufweisende Gehäuseteil (3) und/oder das Dichtelement (17) im Querschnitt im Wesentlichen U-förmig ausgebildet sind.

7. Dichtvorrichtung nach Anspruch 5 oder 6,
**dadurch gekennzeichnet,**
**dass** der erste Schenkel (18) im belastungsfreien Zustand eine geringere Länge aufweist als der nach außen weisende weitere Schenkel (19).

8. Dichtvorrichtung nach einem der Ansprüche 5 - 7,
**dadurch gekennzeichnet,**
**dass** der weitere Schenkel (19) und die weitere Nut (14) im Querschnitt rechteckförmig ausgebildet sind, wobei der weitere Schenkel (19) passgenau in die weitere Nut (14) einsteckbar ist.

9. Dichtvorrichtung nach einem der vorstehenden Ansprüche,
**dadurch gekennzeichnet,**
**dass** die beiden Gehäuseteile (2, 3) im geschlossenen Zustand das Dichtelement (17) vollständig aufnehmen.

10. Dichtvorrichtung nach einem der Ansprüche 5 - 9,
**dadurch gekennzeichnet,**
**dass** das Dichtelement (17) derart in das Gehäuse (1) einführbar ist, dass eine freiliegende Außenfläche des weiteren Schenkels (19) über eine Außenfläche des Gehäuses (1) herausragt.

11. Dichtvorrichtung nach Anspruch 10,
**dadurch gekennzeichnet,**
**dass** die freiliegende Außenfläche des weiteren Schenkels (19) abgerundete Kanten aufweist.

12. Dichtvorrichtung nach einem der vorstehenden Ansprüche,
**dadurch gekennzeichnet,**
**dass** das Dichtelement (17) schwimmend derart gelagert ist, dass es an keinem Gehäuseteil (2, 3) befestigt ist.

13. Gehäuse nach einem der vorstehenden Ansprüche,
**dadurch gekennzeichnet,**
**dass** das Dichtelement (17) zumindest zum Teil aus einem elastischen Werkstoff besteht.

14. Dichtvorrichtung nach einem der vorstehenden Ansprüche,
**dadurch gekennzeichnet,**
**dass** das Dichtelement (17) einen Kunststoff, insbesondere ein Elastomer, oder einen Naturkautschuk enthält.

15. Dichtvorrichtung nach einem der vorstehenden Ansprüche,
**dadurch gekennzeichnet,**
**dass** das Dichtelement (17) mindestens ein Verstärkungselement enthält.

16. Dichtvorrichtung nach einem der vorstehenden Ansprüche,
**dadurch gekennzeichnet ,**
**dass** ein Gehäuseteil (2, 3) eine höhere Steifigkeit aufweist als das jeweils andere Gehäuseteil (2, 3).

## Claims

1. A sealing device for sealing a housing (1), having a first housing part (3) comprising at least one groove (13) and a second housing part (2) comprising at least one web (15), wherein the web (15) and the groove (13) engage in one another to form a sealing gap (16) when the housing (1) is closed, wherein at least one sealing element (17) is provided, which is shaped in such a manner that, after the web (15) has been inserted into the groove (13), it is situated in the sealing gap (16) and is elastically compressed substantially perpendicular to the assembly direction, wherein the sealing element (17) comprises a first leg (18), which is situated in the sealing gap (16) when the two housing parts (2, 3) are closed, and which in the sealing gap (16) with at least one part of the its outer surface abuts an outer surface of the web (15) in sealing manner so that a sealing force (FD) that is substantially perpendicular to the outer surface of the web (15) is produced, wherein the first leg (18) tapers conically towards its free end, forming a point (18'), or towards its free end it has a wedge-shaped or triangular design.

2. A sealing device according to Claim 1,
**characterised in that** the sealing element (17) comprises a support part (18), against which the first and/or the second housing part (2, 3) abut in sealing manner when the housing (1) is closed.

3. A sealing device according to one of the preceding Claims,
**characterised in that** the contour of the housing part (2) comprising the web (15) is not aligned with the contour of the groove (14).

4. A sealing device according to one of the preceding Claims,
**characterised in that** the housing part (2) comprising the web (15) is designed as a tube.

5. A sealing device according to one of the preceding Claims,
**characterised in that** the sealing element (17) comprises at least one additional leg (19)
and **in that** at least one housing part (2) comprises an additional groove (14) to accommodate the additional leg (19).

6. A sealing device according to Claim 5,
**characterised in that** the housing part (3) comprising the additional groove (14) and/or the sealing element (17) are/is designed with a substantially U-shaped cross section.

7. A sealing device according to Claim 5 or 6,
**characterised in that** the first leg (18) is shorter in the stress-free condition than the outwardly pointing, additional leg (19).

8. A sealing device according to one of Claims 5 to 7,
**characterised in that** the additional leg (19) and the additional groove (14) are designed to have a rectangular cross section, with the additional leg (19) being insertable into the additional groove with perfect fit.

9. A sealing device according to one of the preceding Claims,
**characterised in that** the two housing parts (2, 3) completely accommodate the sealing element (17) when closed.

10. A sealing device according to one of Claims 5 to 9,
**characterised in that** the sealing element (17) can be inserted into the housing (1) in such a manner that an exposed outer surface of the additional leg (19) projects above an outer surface of the housing (1).

11. A sealing device according to Claim 10,
**characterised in that** the exposed outer surface of the additional leg (19) has rounded edges.

12. A sealing device according to one of the preceding Claims,
**characterised in that** the sealing element (17) is mounted as a floating element in such a manner that it is not attached to any housing part (2, 3).

13. A sealing device according to one of the preceding Claims,
**characterised in that** the sealing element (17) is made at least in part from an elastic material.

14. A sealing device according to one of the preceding Claims,
**characterised in that** the sealing element (17) contains a plastic, in particular an elastomer, or a natural rubber.

15. A sealing device according to one of the preceding Claims,
**characterised in that** the sealing element (17) contains at least one reinforcing element.

16. A sealing device according to one of the preceding Claims,
**characterised in that** one housing part (2, 3) has a greater rigidity than the other housing part (2, 3).

## Revendications

1. Dispositif d'étanchéité pour l'étanchéité d'un boîtier (1) avec une première partie de boîtier (3) présentant au moins une rainure (13) et une deuxième partie de boîtier (2) présentant au moins une nervure (15), la nervure (15) et la rainure (13) s'engageant l'une dans l'autre à l'état fermé du boîtier (1) en formant une fente d'étanchéité (16), avec au moins un élément d'étanchéité (17) formé pour être mis dans la fente d'étanchéité (16) après l'insertion de la nervure (15) dans la rainure (13) et comprimé élastiquement en direction sensiblement perpendiculaire à la direction d'insertion, l'élément d'étanchéité (17) présentant une première branche (18) disposée dans la fente d'étanchéité (16) à l'état fermé des deux parties de boîtier (2, 3), et appliquée de façon étanche dans la fente d'étanchéité (16) avec au moins une partie de sa face extérieure sur une face extérieure de la nervure (15), de façon à produire une force d'étanchéité (FD) sensiblement perpendiculaire à la face extérieure de la nervure (15), la première branche (18) se terminant en cône à son extrémité libre en formant une pointe (18'), ou étant formée en coin ou en triangle en direction de cette extrémité libre.

2. Dispositif d'étanchéité selon la revendication 1,
**caractérisé en ce que**
l'élément d'étanchéité (17) présente une partie d'appui (18), sur laquelle la première et/ou la deuxième parties de boîtier (2, 3) sont appliquées de façon étanche à l'état fermé du boîtier (1).

3. Dispositif d'étanchéité selon l'une quelconque des revendications précédentes,
**caractérisé en ce que**
le contour de la partie de boîtier (2) présentant la nervure (15) n'est pas aligné sur le contour de la rainure (14).

4. Dispositif d'étanchéité selon l'une quelconque des revendications précédentes,
**caractérisé en ce que**
la partie de boîtier (2) présentant la nervure (15) est réalisée par un tuyau souple.

5. Dispositif d'étanchéité selon l'une quelconque des revendications précédentes,
**caractérisé en ce que**
l'élément d'étanchéité (17) présente au moins une autre branche (19) et **en ce qu'**au moins une partie de boîtier (2) présente une autre rainure (14) destinée à recevoir l'autre branche (19).

6. Dispositif d'étanchéité selon la revendication 5,
**caractérisé en ce que**
la partie de boîtier (3) présentant l'autre rainure (14) et/ou l'élément d'étanchéité (17) présentent une section transversale pour l'essentiel en forme de U.

7. Dispositif d'étanchéité selon la revendication 5 ou 6,
**caractérisé en ce que**
la première branche (18) présente à l'état déchargé une longueur moindre que l'autre branche (19) dirigée vers l'extérieur.

8. Dispositif d'étanchéité selon l'une quelconque des revendications 5 - 7,
**caractérisé en ce que**
l'autre branche (19) et l'autre rainure (14) présentent une section transversale rectangulaire, l'autre branche (19) pouvant s'engager dans l'autre rainure (14) de manière ajustée.

9. Dispositif d'étanchéité selon l'une quelconque des revendications précédentes,
**caractérisé en ce que**
les deux parties de boîtier (2, 3) contiennent entièrement l'élément d'étanchéité (17) à l'état fermé.

10. Dispositif d'étanchéité selon l'une quelconque des revendications 5 - 9,
**caractérisé en ce que**
l'élément d'étanchéité (17) peut être introduit dans le boîtier (1) de telle manière qu'une face extérieure libre de l'autre branche (19) dépasse au-delà d'une face extérieure du boîtier (1).

11. Dispositif d'étanchéité selon la revendication 10,
**caractérisé en ce que**
la face extérieure libre de l'autre branche (19) présente des arêtes arrondies.

12. Dispositif d'étanchéité selon l'une quelconque des revendications précédentes,
**caractérisé en ce que**
l'élément d'étanchéité (17) est flottant de telle manière qu'il ne soit fixé à aucune partie de boîtier (2, 3).

13. Dispositif d'étanchéité selon l'une quelconque des revendications précédentes,
**caractérisé en ce que**
l'élément d'étanchéité (17) se compose au moins en partie d'une matière élastique.

14. Dispositif d'étanchéité selon l'une quelconque des revendications précédentes,
**caractérisé en ce que**
l'élément d'étanchéité (17) contient une matière plastique, en particulier un élastomère, ou un caoutchouc naturel.

15. Dispositif d'étanchéité selon l'une quelconque des revendications précédentes,
**caractérisé en ce que**
l'élément d'étanchéité (17) contient au moins un élément de renforcement.

16. Dispositif d'étanchéité selon l'une quelconque des revendications précédentes,
**caractérisé en ce qu'**
une partie de boîtier (2, 3) présente une plus grande rigidité que l'autre partie de boîtier (2, 3).
